# EUROPÄISCHE PATENTSCHRIFT

(11) **EP 3 289 027 B1**
(45) Veröffentlichungstag und Bekanntmachung des Hinweises auf die Patenterteilung: **15.01.2020**
(21) Anmeldenummer: 16719837.3
(22) Anmeldetag: 26.04.2016
(51) Int. Cl.: C09D 11/12, C08L 91/06, C08F 110/02, C08F 4/6592, G03G 9/087, G03G 9/09, C09D 7/40

(54) **KURZKETTIGE POLYETHYLEN-HOMOPOLYMERE MIT VERBESSERTER MAHLBARKEIT**
SHORT-CHAIN POLYETHYLENE HOMOPOLYMERS HAVING IMPROVED GRINDABILITY
HOMOPOLYMÈRES DE POLYÉTHYLÈNE À CHAÎNE COURTE AYANT UNE MEILLEURE APTITUDE AU BROYAGE

(30) Priorität: 29.04.2015 DE 102015005413
(43) Veröffentlichungstag der Anmeldung: 07.03.2018
(73) Patentinhaber: Clariant International Ltd, 4132 Muttenz (CH)
(72) Erfinder: LANG, Andreas, 82256 Fürstenfeldbruck (DE); HERRMANN, Hans-Friedrich, 64521 Groß-Gerau (DE); HOHNER, Gerd, 86152 Augsburg (DE); BACH, Sebastijan, 86462 Achsheim (DE); FELL, Rainer, 86368 Gersthofen (DE)
(74) Vertreter: Kuba, Stefan
(86) Internationale Anmeldenummer: PCT/EP2016/059265
(87) Internationale Veröffentlichungsnummer: WO 2016/174019

(56) Entgegenhaltungen:
- EP-A1- 1 605 013
- EP-A1- 2 065 411
- WO-A1-01/64799
- WO-A1-2013/027958
- US-A1- 2008 064 805

## Beschreibung

Die vorliegende Erfindung bezieht sich auf kurzkettige Polyethylen-Homopolymere mit hervorragender Mahlbarkeit sowie auf deren Verwendung.

Kurzkettige Polyolefine, die auch als Wachse bezeichnet werden können, haben Bedeutung für eine Vielzahl von Anwendungsgebieten. Steigendes Interesse finden Anwendungen, für die die Wachse in mikronisierter Form eingesetzt werden, z. B. als Zusatz in Druckfarben und Lacken, als Nukleierungsmittel in expandiertem Polystyrol sowie als Dispergiermittel für beispielsweise Pigmente. In Druckfarben erhöhen Wachsmikronisate die Abrieb-, Scheuer- und Kratzfestigkeit von Druckerzeugnissen. In Lacken dienen Wachsmikronisate - außer zur Verbesserung der mechanischen Eigenschaften der Lackoberfläche - zur Erzielung von Mattierungseffekten (vgl. Ullmann's Encyclopedia of Industrial Chemistry, Weinheim, Basel, Cambridge, New York, 5. ed., Vol. A 28, Seite 103 ff). Die Mikronisierung geschieht durch Mahlung auf geeigneten Mühlen, gegebenenfalls mit anschließender Klassierung. Die erforderlichen durchschnittlichen Partikelgrößen liegen in der Regel unterhalb von 15 µm. Da die nötige Mühlentechnologie eine spezielle Infrastruktur und einen dadurch bedingten hohen technischen und finanziellen Aufwand erfordert, stellt die Durchsatzleistung des zu mikronisierenden Materials einen erheblichen wirtschaftlichen Faktor dar. Als ausschlaggebend für die Durchsatzleistung bei der Mikronisierung von Polyolefinwachsen gelten die miteinander korrelierenden Stoffparameter Härte, Sprödigkeit, Kristallinität, Dichte und Schmelzviskosität. Diese Parameter sind auf molekularer Ebene durch Verzweigungsgrad, Isotaxie, Sättigung, Kettenlänge und Kettenlängenverteilung bestimmt. Die bisherige Erfahrung zeigt, dass Polyethylenwachse umso besser für eine Mikronisierung durch Mahlung geeignet sind, je härter und spröder sie sind. Die Schmelzviskosität spielt hier insofern eine Rolle, als im Bereich niedriger Viskositäten - unterhalb von etwa 50 mPa.s bei 140 °C - die Härtewerte abnehmen. Es lag deshalb bisher nahe, für Mahlzwecke eher höherviskose Wachse einzusetzen.

Für die oben genannten Anwendungen finden u. a. mikronisierte Polyethylenwachse aus verschiedenartigen Herstellungsverfahren Verwendung. Üblich sind beispielsweise Wachse aus radikalischer Polymerisation bei hohen Drücken und Temperaturen. Die breite Verteilung der Kettenlängen, d. h. der Polydispersität, und die nicht lineare, verzweigte Struktur des erhaltenen Polyethylens führen zu einer verminderten Härte des Produkts. Weiter können Wachse aus thermisch abgebautem Polyethylen Anwendung finden, jedoch führt der Abbauprozess von linearem Polyethylen zu teilweise verzweigtem und ungesättigtem Polyethylenwachs, welches ebenfalls verminderte Härte aufweist. Durch Polymerisation mit Ziegler-Natta-Katalysatoren, d. h. mit einer TitanVerbindung als katalytisch aktiver Spezies, in Lösung können lineare, gesättigte Polyethylenwachse mit hoher Härte hergestellt werden (vgl., US 3,951,935, US 4,039,560,). Jedoch sind kurzkettige, d. h. wachsartige Polyethylene nur unter erheblichen Einbußen in der Ausbeute erreichbar. Polymerisation mittels Metallocen-Katalysatorsystemen ermöglicht dagegen den Zugang zu wachsartigen Polyethylenen mit hoher Härte und gleichzeitig hohen Ausbeuten bei der Herstellung.

Bekannt ist weiterhin, dass Polyolefinwachse durch Einführung sauerstoffhaltiger Gruppen, etwa Säure- oder Anhydridfunktionen, polar modifiziert werden können. Die Modifizierung dient der Anpassung an spezielle anwendungstechnische Erfordernisse. Beispielsweise kann durch eine solche Maßnahme die Affinität der Wachse zu polaren Medien verbessert werden, so etwa die Dispergierbarkeit in Wasser. Die Modifizierung erfolgt, ausgehend von den unpolaren Wachsen, beispielsweise durch Oxidation mit Luft oder durch Umsetzung mit Sauerstoff enthaltenden Monomeren, etwa ungesättigten Carbonsäuren wie Acryl- oder Methacrylsäure oder Maleinsäure oder Derivaten derartiger Säuren wie Estern oder Anhydriden. Entsprechender Stand der Technik findet sich z. B. in EP 0890583A1 bzw. WO1998023652.

In der europäischen Anmeldeschrift EP 0890619 werden mit Metallocenkatalysatoren hergestellte Polyethylenwachse und ihre Verwendung in Druckfarben und Lacken beschrieben. Die Wachse werden u.a.in gemahlener Form eingesetzt. Bezüglich ihrer Schmelzviskosität wird der sehr breite Bereich zwischen 5 und 100 000 mPa.s, gemessen bei 140 °C, beansprucht. Das einzige genannte erfindungsgemäße Beispiel für ein PE-Homopolymerwachs weist eine Schmelzviskosität bei 140 °C von 350 mPa.s auf.

Unter Einsatz von Metallocenkatalysatoren hergestellte, mikronisierte PE-Wachse sind weiterhin aus EP1261669 bekannt. Sie werden als Dispergierhilfe für organische Pigmente verwendet. Ihre Schmelzviskosität liegt anspruchsgemäß zwischen 10 und 10000 mPa.s bei 140 °C; Angaben über die Schmelzviskosität der beispielhaft eingesetzten Wachse gibt es nicht.

In EP1272575 wird die Anwendung mikronisierter Polyethylen-Wachse in Mischung mit weiteren Komponenten als Additiv für Druckfarben beschrieben. Hinsichtlich der Schmelzviskositäten der Wachse wird ein Bereich zwischen 10 und 10000 mPa.s bei 140 °C genannt, das einschlägige erfindungsgemäße Beispiel liegt bei 350 mPa.s.

Im vorstehend genannten Stand der Technik werden keine näheren Angaben zum Mahlprozess gemacht, insbesondere wird nicht auf Aspekte eingegangen, die dessen Wirtschaftlichkeit oder Effektivität betreffen, etwa in Form von Angaben zur erreichten Durchsatzleistung o. ä.

Aufgabe der vorliegenden Erfindung ist es, Polyethylenwachse mit verbesserter Mahlbarkeit zur Verfügung zu stellen, die gleichzeitig in bestehenden Anwendungen ohne Qualitätsverlust einsetzbar sind.

Es wurde überraschend gefunden, dass kurzkettige wachsartige Polyethylen-Homopolymere mit verbesserter Mahlbarkeit erhalten werden können, wenn diese mithilfe von Metallocenkatalysatorsystemen hergestellt werden und bestimmte Erfordernisse erfüllen.

Gegenstand der Erfindung sind somit kurzkettige wachsartige Polyethylen-Homopolymere mit verbesserter Mahlbarkeit, die mithilfe von Metallocenkatalysatorsystemen hergestellt werden und eine Schmelzviskosität bei 140 °C im Bereich von 5 und < 60 mPa.s , sowie eine Stempelpenetrationshärte gemessen nach DGF M-III 9e von 210 bis 500 bar aufweisen und die ferner gekennzeichnet sind durch
- einen Tropfpunkt von 113 bis 128 °C,
- einen Schmelzpunkt von 100 bis 123°C,
- eine Dichte von 0,93 bis 0,97 g/cm³ bei 25 °C, sowie
- eine Schmelzwärme von 210 bis 270 J/g
- sowie eine mittleren Teilchengröße dso von ≤ 15 µm.

Insbesondere liegt die Schmelzviskosität bei 140 °C im Bereich von 7 bis 50 mPa.s, bevorzugt im Bereich von 8 bis 30 mPa.s, insbesondere bevorzugt von 9 bis 14 mPa.s.

Die Schmelzviskosität wird hierbei nach DIN 53019 mit einem Rotationsviskosimeter wie folgt bestimmt:
Die zu untersuchende Wachsschmelze befindet sich in einem Ringspalt zwischen zwei koaxialen Zylindern, von denen der eine mit konstanter Drehzahl rotiert (Rotor), der andere ruht (Stator). Ermittelt werden die Drehzahl und das Drehmoment, das nötig ist, um den Reibungswiderstand der Flüssigkeit im Ringspalt zu überwinden. Aus den geometrischen Abmessungen des Systems sowie den ermittelten Drehmoment- und Drehzahlwerten lassen sich die in der Flüssigkeit herrschende Schubspannung und das Geschwindigkeitsgefälle und damit die Viskosität berechnen.
Die erfindungsgemäßen Polyethylen-Homopolymere weisen einen Tropfpunkt im Bereich von 113 bis 128 °C, bevorzugt von 114 bis 127 °C, besonders bevorzugt von 115 bis 125 °C, insbesondere bevorzugt von 115 bis 122 °C, einen Schmelzpunkt im Bereich von 100 bis 123 °C, bevorzugt von 110 bis 122 °C, besonders bevorzugt von 112 bis 121 °C, eine Dichte bei 25 °C im Bereich von 0,93 g/cm³ bis 0,97 g/cm³, bevorzugt von 0,94 g/cm³ bis 0,97 g/cm³, besonders bevorzugt von 0,95 g/cm³ bis 0,97 g/cm³, eine Schmelzwärme im Bereich von 210 J/g bis 270 J/g, bevorzugt von 220 J/g bis 260 J/g, besonders bevorzugt von 225 J/g bis 250 J/g sowie eine Stempelpenetrationshärte von 210 bar bis 500 bar, bevorzugt von 220 bar bis 480 bar, besonders bevorzugt von 225 bar bis 460 bar auf.

Die Tropfpunkte werden nach DIN 51801-2, die Dichten nach DIN EN ISO 1183-3 bestimmt. Schmelzpunkte und Schmelzwärmen werden mit Hilfe der Differentialthermoanalyse nach DIN EN ISO 11357-1 im Temperaturbereich von -50 bis 200 °C und bei einer Heizrate von 10 K/min unter Stickstoff gemessen.

Die Stempelpenetrationshärte wird nach DGF M-III 9e ("Deutsche Einheitsmethoden zur Untersuchung von Fetten, Fettprodukten, Tensiden und verwandten Stoffen" der Deutschen Gesellschaft für Fettwissenschaft, 2. Auflage 2014) bestimmt.

In einer besonderen Ausführungsform liegt das erfindungsgemäße Polyethylen-Homopolymerwachs als Mikronisat mit einer mittleren Partikelgröße, von ≤ 12 µm, insbesondere von ≤ 10 µm vor.

Der d₅₀-Wert wird nach ISO 13320-1 bestimmt.

Für die Herstellung der erfindungsgemäßen Polyethylenwachse werden Metallocenverbindungen der Formel I als Katalysator eingesetzt.

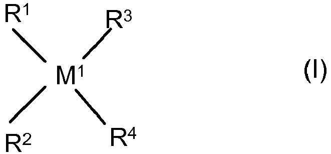

Diese Formel umfasst auch Verbindungen der Formel Ia, 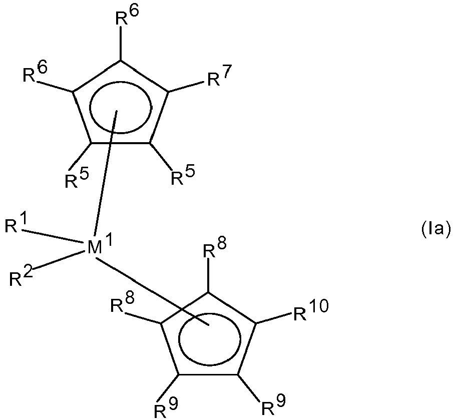 der Formel Ib, 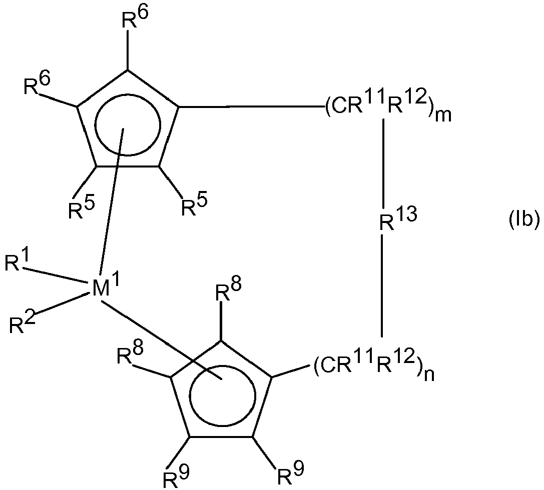 und der Formel Ic.

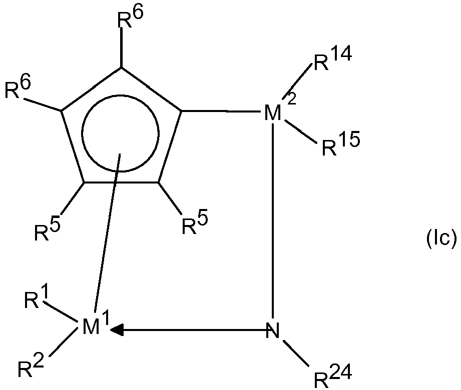

In den Formeln I, Ia und Ib ist M¹ ein Metall der Gruppe IVb, Vb oder VIb des Periodensystems, beispielsweiseTitan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀, vorzugsweise C₁-C₃-Alkylgruppe, insbesondere Methyl, eine C₁-C₁₀-, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-,vorzugsweise C₁-C₄-Alkylgruppe, eine C₆-C₁₀-, vorzugsweise C₆-C₈-Arylgruppe, eine C₁-C₁₀-,vorzugsweise C₁-C₃-Alkoxygruppe, einen -NR¹⁶₂-, -SR¹⁶⁻, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 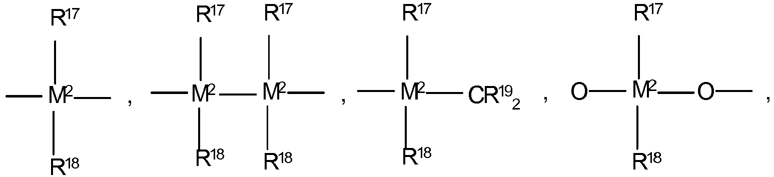 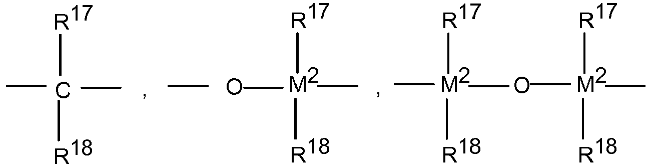 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Konkrete Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel (I) sind aluminiumorganische Verbindungen, insbesondere Alumoxane oder auch aluminiumfreie Systeme wie R²⁰ₓNH₄₋ₓBR²¹₄, R²¹ₓPH₄₋ₓBR²¹₄, R²⁰₃CBR²¹₄ oder BR²¹₃. In diesen Formeln bedeutet × eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Je nach Verfahren können auch geträgerte Metallocen-Katalysatoren zur Verwendung kommen.

Die Polymerisation wird in Lösung, in Suspension oder in der Gasphase diskontinuierlich oder kontinuierlich, ein- oder mehrstufig durchgeführt. Die Temperatur der Polymerisation liegt zwischen 0 und 200 °C, bevorzugt im Bereich von 70 bis 150 °C.

Mögliche Verfahren zur Herstellung der erfindungsgemäßen Polyolefinwachse sind in EP-A-0 321 851 und EP-A-571 882 beschrieben. Prinzipiell sind jedoch auch alle anderen Verfahren geeignet, welche den Einsatz von Metallocen- oder anderen Einzentren-Katalysatorsystemen mit den Zentralatomen Titan, Zirkonium, Hafnium, Vanadium, Niob, Tantal, Chrom, Molybdän oder Wolfram ermöglichen.

Der Gesamtdruck im Polymerisationssystem beträgt 0,5 bis 120 bar. Bevorzugt ist die Polymerisation in dem technisch besonders interessanten Druckbereich von 5 bis 64 bar.

Als Regler zur Einstellung der Molmasse bzw. der Schmelzviskosität wird in bekannter Weise Wasserstoff zugegeben. Die Schmelzviskosität sinkt mit steigendem Wasserstoffpartialdruck; dieser liegt im Bereich von 0,05 bis 50 bar, vorzugsweise 0,1 bis 25 bar, insbesondere 0,2 bis 10 bar. Weiterhin kann die Schmelzviskosität auch durch Anpassung der Polymerisationstemperatur verändert werden. In der Regel werden bei Temperaturerhöhung niedrigere Schmelzviskositäten erhalten.

Breit verteilte Polymere sind zugänglich durch einen mehrstufigen Prozess oder durch Verwendung von Mischungen von mehreren Katalysatoren.

Die Konzentration der Übergangsmetallkomponente, bezogen auf das Übergangsmetall, liegt zwischen 10⁻³ bis 10⁻⁷, vorzugsweise 10⁻⁴bis 10⁻⁶ mol Übergangsmetall pro dm³ Lösemittel bzw. pro dm³ Reaktorvolumen. Der Cokatalysator wird entsprechend der Wirksamkeit zur Aktivierung in einem Verhältnis bevorzugt von bis zu 1:500 bezogen auf das Übergangsmetall. Prinzipiell sind aber auch höhere Konzentrationen möglich.

Als Suspensions- oder Lösungsmittel dienen aliphatische, unverzweigte oder verzweigte, offenkettige oder cyclische Kohlenwasserstoffe mit mindestens 3 C-Atomen, wie beispielsweise Propan, i-Butan, n-Butan, Hexan, Cyclohexan, Heptan, Oktan oder Dieselöle oder aromatische Kohlenwasserstoffe wie beispielsweise Toluol oder niedrigsiedende halogenierte Kohlenwasserstoffe, wie beispielsweise Methylenchlorid sowie deren Gemische.

Zur Polymerisation kann vor der Zugabe des Katalysators zusätzlich eine andere Aluminiumalkylverbindung wie z.B. Trimethylaluminium, Triethylaluminium, Triisobutylaluminium oder Isoprenylaluminium zur Inertisierung des Polymerisationssystems in einer Konzentration von 1 bis 0,001 mmol Al pro kg Reaktorinhalt zugegeben werden. Darüber hinaus können diese Verbindungen auch zusätzlich zur Regelung der Molmasse eingesetzt werden.

Die Mikronisierung der erfindungsgemäßen Polyethylen-Wachse erfolgt in bekannter Weise durch Mahlung und anschließender Sichtung des Mahlguts. Für den Mahlprozess können alle geeigneten Mühlenkonstruktionen eingesetzt werden. In Frage kommen z.B. Prallmühlen oder Strahlmühlen.

Die Wachse können auch in Mischung mit weiteren Komponenten gemeinsam vermahlen werden. Als weitere Komponenten kommen unter anderem PTFE, Amidwachse, Montanwachse, natürliche Pflanzenwachse wie z. B. Carnaubawachs oder Derivate von Montan- oder natürlichen Pflanzenwachsen , Sorbitolester, synthetische Kohlenwasserstoffwachse wie Fischer-Tropsch-Paraffine oder nicht mittels Metallocenkatalysatoren hergestellte Polyolefinwachse, mikro- und makrokristalline Paraffine, polare Polyolefinwachse, Polyamide und Polyolefine in Frage. Zur genaueren Bestimmung dieser Zusatzkomponenten sei hierbei ausdrücklich auf das Dokument EP 1272575 verwiesen. Weiterhin eignen sich zur gemeinsamen Vermahlung mit den erfindungsgemäßen Polyethylenwachsen auch glycosidische Polymere, wie sie beispielsweise in dem Dokument WO 2013/026530 beschrieben sind, z. B. nicht modifizierte oder modifizierte Stärke. Sofern pulverförmige Mischungen hergestellt werden sollen, erlaubt die hohe Kristallinität der erfindungsgemäßen Polyethylenwachse eine leichte Mahlbarkeit der Mischung und vermeidet ein Verkleben der Pulver, wie dies bei Verwendung anderer niedrigschmelzenden Wachse regelmäßig zu beobachten ist.

Die erfindungsgemäßen Polyethylen-Homopolymere sind in vielfältigen Einsatzgebieten vorteilhaft anwendbar. Sie erlauben, als Komponenten in Tonern, durch ihre niedrige Viskosität eine gute Mischbarkeit bei der Tonerherstellung und können daher in besonderer Weise Anwendung für den Einsatz in Schwarz- und Farb-Tonern in Fotokopierern und Laserdruckern finden. In gleicher Weise sind diese Wachse vorteilhaft einsetzbar in Druckfarben, in Lacken, als Nukleierungsmittel für expandierbares Polystyrol sowie als Komponente in Schmelzklebern.

In allen Anwendungen, in denen die Wachse bei erhöhter Temperatur im schmelzflüssigen Zustand verarbeitet werden, wird eine Verfärbung oder Vernetzung der Schmelze vermieden, wodurch für den Anwender auch bei hohen Temperaturen und langen Standzeiten in Verarbeitungsmaschinen keine thermisch bedingte Veränderung der Wachsschmelze erfolgt. Aus diesem Grund ist die Verwendung der erfindungsgemäßen Polyethylen Homopolymere als Hilfsmittel in der Kunststoffverarbeitung, zum Beispiel als Gleitmittel sehr vorteilhaft. Insbesondere vorteilhaft ist die Verwendung bei der Herstellung von Masterbatches, zum Beispiel von Pigment- oder Farbstoff-Masterbatches zur Polymereinfärbung. Die niedrige Viskosität der erfindungsgemäßen Polyethylen-Wachsschmelzen ermöglicht eine verbesserte Benetzung und Dispergierung der Farbträger und erhöht dadurch die Farbausbeute und Intensität.

### Beispiele

### Herstellung von Polyethylenwachsen

### Beispiel 2 (nicht erfindungsgemäß):

Zur Herstellung des Katalysators wurden 6 mg Bis(indenyl)zirkondichlorid in 20 cm³ toluolischer Methylaluminoxan-Lösung (entsprechend 27 mmol Al) gelöst und durch 15-minütiges Stehenlassen mit dem Methylaluminoxan umgesetzt. Parallel hierzu wurde ein trockener mit Stickstoff gespülter 16 dm³-Kessel mit 4 kg Propan gefüllt und auf 70 °C temperiert. Bei dieser Temperatur wurden 0,15 bar Wasserstoff und 30 cm³ der toluolischen Methylaluminoxan-Lösung über eine Druckschleuse zugegeben und der Ansatz bei 100 Upm gerührt. Der Druck wurde mit Ethylen auf einen Gesamtdruck von 31 bar ergänzt und die Polymerisation bei 250 Upm durch Zugabe des Katalysators über die Druckschleuse gestartet. Die Polymerisationstemperatur wurde durch Kühlen auf 70 °C geregelt und der Gesamtdruck durch Nachdosieren von Ethylen konstant gehalten. Nach 1 h Polymerisationszeit wurde die Reaktion durch Zugabe von Isopropanol gestoppt und der Reaktor entspannt und geöffnet. Die physikalischen Eigenschaften des erhaltenen Polyethylenwachses sind in Tab. 1 angegeben.

### Beispiele 3, 4 und 9 (nicht erfindungsgemäß) und Beispiele 5-8 (erfindungsgemäß):

Die Herstellung geschah in analoger Weise wie für Beispiel 2 angegeben. Die Einstellung der Schmelzviskosität erfolgte durch schrittweise Erhöhung der Wasserstoffkonzentration.

Die erfindungsgemäßen Polyethylene aus den Beispielen 5 - 8 wurden auf einer Fließbettgegenstrahlmühle AFG 100, Fa. Hosokawa Alpine gemahlen. Die Sichterdrehzahl betrug 8000 Umdrehungen pro Minute (Upm) und der Mahldruck 6,0 bar. Als Maßzahl für die Mahlbarkeit diente die Durchsatzleistung, gemessen in Gramm/h. Die Partikelgrößenbestimmung wurde mit Hilfe eines Mastersizer 2000, Fa. Malvern; Messbereich 0,02 - 2000 µm mittels Laserbeugung bestimmt. Die Proben wurden mit einer Nassdispergiereinheit Hydro 2000 S, Fa. Malvern vorbereitet.

Zum Vergleich wurden die nicht erfindungsgemäßen Polyethylene aus den Beispielen 2 - 4 und 9 unter analogen Bedingungen vermahlen.

Als weitere nicht erfindungsgemäße Vergleiche wurden die wachsartigen Polyethylene GW 115.92.HV bzw. GW 105.95.LV der Firma GreenMantra, hergestellt durch thermischen Abbau von LLDPE bzw. HDPE, ferner ein durch Ziegler-Natta Polymerisation hergestelltes HDPE vom Typ LICOWAX® PE 130 der Firma Clariant und die beiden Fischer-Tropsch- Paraffine SASOLWAX® C80 und SASOLWAX® H1 der Firma Sasol vermahlen und auf Durchsatzleistung geprüft.

Die physikalischen Daten der Wachse sind in Tabelle 1 aufgeführt. Die Ergebnisse der Mikronisierung sind in Tabelle 2 gegenübergestellt. Sie zeigen, dass mit den Polyethylenen aus den Beispielen 5 - 8 Mikronisate mit mindestens vergleichbar feiner Partikelgröße d₅₀, aber deutlich höherer Durchsatzmenge erhalten werden konnten.

**Tabelle 1: Physikalische Eigenschaften der beispielhaft eingesetzten Wachse:**

| Beispiel | Bezeichnung | Viskosität @140 °C | Tropfpunkt | Schmelzpunkt | Schmelzwärme | Stempelpenetrationshärte | Dichte |
|---|---|---|---|---|---|---|---|
| | | mPas | °C | °C | J/g | bar | g/cm³ |
| 1 Vgl. | Licowax® PE 130 | 350 | 129 | 127 | 229 | 611 | 0,97 |
| 2 Vgl. | Metallocen-PE-Wachs | 350 | 130 | 127 | 264 | 550 | 0,97 |
| 3 Vgl. | Metallocen-PE-Wachs | 100 | 128 | 125 | 254 | 481 | 0,97 |
| 4 Vgl. | Metallocen-PE-Wachs | 60 | 128 | 123 | 268 | 470 | 0,97 |
| 5 erfindungsgem. | Metallocen-PE-Wachs | 30 | 125 | 121 | 250 | 456 | 0,97 |
| 6 erfindungsgem. | Metallocen-PE-Wachs | 14 | 122 | 116 | 248 | 409 | 0,96 |
| 7 erfindungsgem. | Metallocen-PE-Wachs | 9 | 116 | 112 | 237 | 366 | 0,95 |
| 8 erfindungsgem. | Metallocen-PE-Wachs | 8 | 115 | 111 | 225 | 346 | 0,95 |
| 9 Vgl. | Metallocen-PE-Wachs | 4 | 113 | 98 | 223 | 221 | 0,93 |
| 10 Vgl. | Sasolwax® C80 | 4 | 88 | 82 | 222 | 268 | 0,92 |
| 11 Vgl. | Sasolwax® H 1 | 9 | 111 | 108 | 233 | 478 | 0,94 |
| 12 Vgl. | GW 115.92.HV | 482 | 115 | 111 | 150 | | 0,92 |
| 13 Vgl. | GW 105.95.LV | 38 | 106 | 108 | 132 | | 0,95 |

**Tabelle 2: Mahlergebnisse**

| Wachs entsprechend Tab. 1: | Durchsatz g/h | d₅₀ µm | Bemerkung |
|---|---|---|---|
| Beispiel 1 | 1000 | 8,3 | Problemlose Mahlung |
| Beispiel 2 | 1100 | 8,7 | Problemlose Mahlung |
| Beispiel 3 | 1200 | 9,1 | Problemlose Mahlung |
| Beispiel 4 | 1280 | 9,1 | Problemlose Mahlung |
| Beispiel 5 (erf.) | 1511 | 8,3 | Problemlose Mahlung |
| Beispiel 6 (erf.) | 1900 | 8,3 | Problemlose Mahlung |
| Beispiel 7 (erf.) | 1920 | 8,5 | Problemlose Mahlung |
| Beispiel 8 (erf.) | 1580 | 8,7 | Problemlose Mahlung |
| Beispiel 9 | 950 | 9,3 | Verbackung im Mahlraum |
| Beispiel 10 | 950 | 8,9 | Problemlose Mahlung |
| Beispiel 11 | 1240 | 8,5 | Problemlose Mahlung |
| Beispiel 12 | 190 | 14,4 | Starke Verbackung im Mahlraum |
| Beispiel 13 | 110 | 14,7 | Starke Verbackung im Mahlraum |

### Beispiele 14 - 16 (Verwendung in Druckfarbenrezepturen):

Das erfindungsgemäße mikronisierte Wachs aus Beispiel 7 wurde in das jeweilige Druckfarbensystem eindispergiert und anwendungstechnisch in unterschiedlichen Drucktechniken ausgeprüft:

### Beispiel 14: Flexodruck

Das Mikronisat wurde mit einem Anteil von 0,5 % und 0,8 % unter intensivem Rühren mit einem Dissolver in eine wässrige Flexodruckfarbe eindispergiert und nach Standard ausgeprüft. Als Vergleichsbeispiel wurden zwei für die Anwendung typische Mikronisate, das Produkt Spray 30 der Firma Sasol (Fischer-Tropsch-Paraffin, d₅₀ = 6 µm) und Ceridust® 3610 der Firma Clariant (mikronisiertes Polyethylenwachs, d₅₀ = 5,5 µm) verwendet.

Zur Herstellung der Farbe wurden Mischungen aus Flexonylblau A B2G (Clariant) und dest. Wasser (5:1; Mischung A) sowie aus Viacryl SC 175 W, 40 WAIP (Cytec Ind.) und dest. Wasser (1:1; Mischung B) hergestellt. Anschließend wurden 70 Teile der Mischung B langsam in 30 Teile der Mischung A eingerührt und das erhaltene Gemisch wurde bei einer Rührgeschwindigkeit von 1200 Upm 30 min homogenisiert. In die Farbe wurden 0,5 bzw 0,8 Gew.-% Mikronisat eingearbeitet. Die Flexodruckfarbe wurde mit einem Filmziehgerät (Control Coater) unter Verwendung eines Drahtrakels auf saugfähiges Flexopapier aufgetragen (LWC 60 g/m²; 6 µm Nassfilmstärke).

Nach 24 h Trockenzeit wurden Scheuerschutz, Glanz und Gleitreibung gemessen.

Zur Bestimmung der Scheuerbeständigkeit wurde der Andruck zunächst gescheuert (Scheuerprüfgerät Prüfbau Quartant, Scheuerbelastung 48 g/qcm, Scheuergeschwindigkeit 15 cm/s). Gemessen wurde die Intensität der auf das Prüfblatt übertragenen Farbe (Farbdifferenz ΔE nach DIN 6174, Messung mit Hunterlab D 25-2, Hunter).

Der Gleitreibungskoeffizient wurde mit einem Friction Peel Tester 225-1 (Thwing-Albert Instruments) bestimmt.

Die Bestimmung des Glanzgrads erfolgte mit einem micro-TRI-gloss-p-Glanzmessgerät (BYK-Gardner GmbH). Die in nachfolgender Tabelle 3 dargestellten Resultate zeigen, dass das erfindungsgemäße Wachs bezüglich Farbdifferenz, und damit Abriebfestigkeit, sowie Glanz und Gleitreibung den Vergleichsbeispielen in keiner Weise nachsteht.

**Tabelle 3: Wässriger Flexodruck auf Algro Finess Papier 80 g/m²**

| Probe | Glanz | | Gleitreibung | ΔE |
|---|---|---|---|---|
| | 20° | 60° | | |
| ohne Wachs | 5 | 38 | 0,44 | 4,01 |
| 0,5 % Spray 30 | 5 | 37 | 0,16 | 2,32 |
| 0,8 % Spray 30 | 5 | 34 | 0,15 | 1,96 |
| 0,5 % Ceridust 3610 | 5 | 36 | 0,19 | 2,83 |
| 0,8 % Ceridust 3610 | 5 | 34 | 0,18 | 2,80 |
| 0,5 % Mikronisiertes Polyethylen aus Beispiel 7 | 5 | 37 | 0,17 | 2,78 |
| 0,8 % Mikronisiertes Polyethylen aus Beispiel 7 | 5 | 35 | 0,17 | 2,77 |

### Beispiel 15: Tiefdruckfarbe

Das Mikronisat wurde in Tiefdruckfarbe mit einem Anteil von 1 % unter intensivem Rühren mit einem Dissolver eindispergiert und nach Standard ausgeprüft. Als Vergleichsbeispiel wurden zwei für die Anwendung typische Mikronisate, das Produkt Spray 30 der Firma Sasol (d₅₀ = 6 µm), und Ceridust 3610 der Firma Clariant (d₅₀ = 5,5 µm), verwendet.

Eingesetzt wurde eine Illustrationstiefdruckfarbe vom Typ RR Grav Rot toluolbasierend (Siegwerk Druckfarben AG); zu den Probedrucken auf Tiefdruckpapier (Algro Finess 80 g/m²) wurde eine Tiefdruckmaschine LTG 20, Einlehner Prüfmaschinenbau, verwendet.

Gemessen wurden Scheuerbeständigkeit, Gleitreibungskoeffizient und Glanz. Die in nachfolgender Tabelle 4 dargestellten Resultate zeigen, dass das erfindungsgemäße Wachs bezüglich Farbdifferenz und damit Abriebfestigkeit sowie Glanz und Gleitreibung den Vergleichsbeispielen in keiner Weise nachsteht.

**Tabelle 4: Tiefdruck**

| Probe | Glanz | | Gleitreibung | ΔE |
|---|---|---|---|---|
| | 20° | 60° | | |
| Tiefdruckfarbe - ohne Wachs Halbton | 13 | 62 | 0,61 | 14,8 |
| Tiefdruckfarbe - ohne Wachs Vollton | 26 | 80 | 0,59 | 13,3 |
| Tiefdruckfarbe - Ceridust 3610 Halbton | 10 | 51 | 0,19 | 3,4 |
| Tiefdruckfarbe - Ceridust 3610 Vollton | 18 | 63 | 0,19 | 3,3 |
| Tiefdruckfarbe - Mikronisiertes Polyethylen aus Beipiel 7 Halbton | 9 | 51 | 0,18 | 3,4 |
| Tiefdruckfarbe - Mikronisiertes Polyethylen aus Beipiel 7 Vollton | 18 | 64 | 0,16 | 3,5 |
| Tiefdruckfarbe - Spray 30 Halbton | 9 | 49 | 0,16 | 3,2 |
| Tiefdruckfarbe - Spray 30 Vollton | 17 | 60 | 0,16 | 3,5 |

### Beispiel 16: Offsetdruckfarbe

Das Mikronisat wurde in Offsetdruckfarbe (Novaboard cyan 4 C 86, K+E Druckfarben) mit einem Anteil von 1,5 % und 3 % unter intensivem Rühren mit einem Dissolver eindispergiert und nach Standard ausgeprüft. Als Vergleichsbeispiel wurden zwei für die Anwendung typische Mikronisate, das Produkt Spray 30 der Firma Sasol (d₅₀ = 6 µm), und Ceridust 3610 der Firma Clariant (d₅₀ = 5,5 µm), verwendet.

Es wurde ein Probedruck (Prüfbau-Mehrzweck-Probedruckmaschine System Dr. Dürner) auf Papier des Typs Phoenomatt 115 g/m2 (Scheufelen GmbH+Co KG) angefertigt und das Scheuerverhalten auf einem Scheuerprüf-Gerät (Scheuerprüfer Prüfbau Quartant) bei einer Scheuerbelastung von 48 g/cm² und einer Scheuergeschwindigkeit von 15 cm/sec untersucht. Beurteilt wurde die Intensität der auf das Prüfblatt übertragenen Farbe (Farbdifferenz nach DIN 6174, Messung mit Hunterlab D 25-2, Hunter). Die in nachfolgender Tabelle 5 dargestellten Resultate zeigen, dass das erfindungsgemäße Wachs bezüglich Farbdifferenz und damit Abriebfestigkeit, sowie Glanz und Gleitreibung den Vergleichsbeispielen in keiner Weise nachsteht.

**Tabelle 5: Offsetdruck auf Papier**

| Probe | Glanz | | Gleitreibung | ΔE |
|---|---|---|---|---|
| | 20° | 60° | | |
| ohne Wachs | 8 | 46 | 0,61 | 10,08 |
| 1,5 % Spray 30 | 8 | 48 | 0,44 | 5,24 |
| 3,0 % Spray 30 | 7 | 45 | 0,35 | 2,26 |
| 1,5 % Ceridust 3610 | 9 | 52 | 0,49 | 4,07 |
| 3,0 % Ceridust 3610 | 9 | 49 | 0,37 | 2,80 |
| 1,5 % Mikronisiertes Polyethylen aus Beispiel 7 | 10 | 53 | 0,40 | 3,73 |
| 3,0 % Mikronisiertes Polyethylen aus Beispiel 7 | 9 | 50 | 0,31 | 2,64 |

## Patentansprüche

1. Polyethylen-Homopolymer mit verbesserter Mahlbarkeit, hergestellt mit einem Metallocen-Katalysatorsystem und **gekennzeichnet durch**
- eine Schmelzviskosität gemessen nach DIN 53019 im Bereich von 5 bis < 60 mPa.s bei 140°C,
- eine Stempelpenetrationshärte gemessen nach DGF M-III 9e von 210 bis 500 bar,
- einen Tropfpunkt von 113 bis 128 °C,
- einen Schmelzpunkt von 100 bis 123°C,
- eine Dichte von 0,93 bis 0,97 g/cm³ bei 25 °C,
- eine Schmelzwärme von 210 bis 270 J/g
- sowie eine mittleren Teilchengröße d₅₀ von ≤ 15 µm.

2. Verwendung von Polyethylen-Homopolymeren nach Anspruch 1 als Additivkomponente für Druckfarben.

3. Verwendung von Polyethylen-Homopolymeren nach Anspruch 1 als Additivkomponente für Lacke.

4. Verwendung von Polyethylen-Homopolymeren nach Anspruch 1 als Komponente von Schmelzklebemassen.

5. Verwendung von Polyethylen-Homopolymeren nach Anspruch 1 als Komponente von Fototonern.

6. Verwendung von Polyethylen-Homopolymeren nach Anspruch 1 als Komponente von Pigment-Masterbatches.

## Claims

1. Polyethylene homopolymer having improved grindability, prepared with a metallocene catalyst system and **characterized by**
- a melt viscosity as measured to DIN 53019 in the range from 5 to < 60 mPa.s at 140°C,
- a ram penetration hardness as measured to DGF M-III 9e of 210 to 500 bar,
- a dropping point of 113 to 128°C,
- a melting point of 100 to 123°C,
- a density of 0.93 to 0.97 g/cm³ at 25°C,
- a heat of fusion of 210 to 270 J/g,
- and an average particle size d₅₀ of ≤ 15 µm.

2. Use of polyethylene homopolymer according to Claim 1 as an additive component for printing inks.

3. Use of polyethylene homopolymer according to Claim 1 as an additive component for coating materials.

4. Use of polyethylene homopolymer according to Claim 1 as a component of hotmelt adhesives.

5. Use of polyethylene homopolymer according to Claim 1 as a component of photographic toners.

6. Use of polyethylene homopolymer according to Claim 1 as a component of pigment masterbatches.

## Revendications

1. Homopolymère de polyéthylène doté d'une caractéristique de broyage améliorée, préparé avec un système de catalyseur de type métallocène et **caractérisé par**
- une viscosité à l'état fondu selon la norme en DIN 53019 dans la plage de 5 à < 60 mPa.s à 140 °C,
- une dureté de pénétration de poinçon mesurée d'après la norme DGF M-III 9^{e} de 210 à 500 bars,
- un point de goutte de 113 à 128 °C,
- un point de fusion de 100 à 123 °C,
- une densité de 0,93 à 0,97 g/cm³ à 25 °C,
- une chaleur de fusion de 210 à 270 J/g,
- ainsi qu'une grosseur moyenne de particule d₅₀ de ≤ 15 pm.

2. Utilisation d'homopolymères de polyéthylène selon la revendication 1 en tant que composant d'additif pour des encres.

3. Utilisation d'homopolymères de polyéthylène selon la revendication 1 en tant que composant d'additif pour des vernis.

4. Utilisation d'homopolymères de polyéthylène selon la revendication 1 en tant que composant de masses adhésives fusibles.

5. Utilisation d'homopolymères de polyéthylène selon la revendication 1 en tant que composant de photo-toners.

6. Utilisation d'homopolymères de polyéthylène selon la revendication 1 en tant que composant de mélanges-maîtres pigmentaires.
